# EUROPEAN PATENT APPLICATION

(11) **EP 4 513 721 A1**
(43) Date of publication of application: **26.02.2025**
(21) Application number: 23791798.4
(22) Date of filing: 14.04.2023
(51) Int. Cl.: H02K 3/28

(54) **ROTATING ELECTRIC MACHINE STATOR**

(30) Priority: 21.04.2022 JP 2022070412
(71) Applicant: AISIN CORPORATION, Kariya-shi, Aichi 448-8650 (JP)
(72) Inventor: HASHIMOTO, Shingo, Kariya-shi, Aichi 448-8650 (JP); SUGAWARA, Junichi, Kariya-shi, Aichi 448-8650 (JP); MISHINA, Tokuhisa, Kariya-shi, Aichi 448-8650 (JP)
(74) Representative: TBK
(86) International application number: PCT/JP2023/015152
(87) International publication number: WO 2023/204150

(57) **Abstract**

Disclosed is a stator for a rotating electrical machine that includes: a stator core having a plurality of slots; and a stator coil formed by installing, for each phase, a plurality of coil pieces along an entire circumference of the stator core. The stator coil is wound in such that two sets of coils are connected in parallel for each phase, and is wound by short pitch winding. For each phase, each of a circumferential coil center of a first set of the coils and a circumferential coil center of a second set of the coils either coincides with a coil center position for each phase, the coil center position being formed at each magnetic pole pitch along the entire circumference of the stator core, or is alternately shifted by the same amount toward one side and the other side in a circumferential direction with respect to the coil center position for each magnetic pole pitch.

## Description

### TECHNICAL FIELD

The present disclosure relates to stators for rotating electrical machines.

### BACKGROUND ART

A technique is known in which a stator coil is wound by short pitch winding using a plurality of layers (radial layers in slots) for each phase.

### Related Art Documents

### Patent Documents

Patent Document 1: Japanese Unexamined Patent Application Publication No. 2021-141774 (JP 2021-141774 A)

### SUMMARY OF THE INVENTION

### Problem to be Solved by the Invention

In a configuration in which a stator coil is wound in such a manner that two sets of coils are connected in parallel for each phase and is wound by short pitch winding, a circulating current tends to be generated that circulates within the loop of the coils connected in parallel for each phase.

Therefore, in one aspect, an object of the present disclosure is to reduce a circulating current in a configuration in which a stator coil is wound in such a manner that two sets of coils are connected in parallel for each phase and is wound by short pitch winding.

### Means for Solving the Problem

In one aspect, a stator for a rotating electrical machine is provided that includes: a stator core having a plurality of slots; and
a stator coil formed by installing, for each phase, a plurality of coil pieces along an entire circumference of the stator core.
The stator coil is wound in such a manner that two sets of coils are connected in parallel for each phase, and is wound by short pitch winding.
For each phase, each of a circumferential coil center of a first set of the coils and a circumferential coil center of a second set of the coils
coincides with a coil center position for each phase, the coil center position being formed at each magnetic pole pitch along the entire circumference of the stator core, or is alternately shifted by a same amount toward one side and the other side in a circumferential direction with respect to the coil center position for each magnetic pole pitch.

Effects of the Invention

In the one aspect, according to the present disclosure, a circulating current can be reduced in the configuration in which the stator coil is wound in such a manner that two sets of coils are connected in parallel for each phase and is wound by short pitch winding.

### BRIEF DESCRIPTION OF THE DRAWINGS

[FIG. 1] FIG. 1 is a diagram schematically showing a stator for a rotating electrical machine according to an embodiment.
[FIG. 2] FIG. 2 is a diagram showing an example of a connection form of a stator coil of the stator for a rotating electrical machine according to a first embodiment.
[FIG. 3] FIG. 3 is an overall winding diagram of the stator coil according to the first embodiment.
[FIG. 4] FIG. 4 is an illustration of a coil piece.
[FIG. 5] FIG. 5 is a winding diagram (part of FIG. 3) of a general portion according to the first embodiment, and is an illustration of a repetitive pattern.
[FIG. 6] FIG. 6 is a side view (side view as viewed in a radial direction from the radially inner side) illustrating a method for arranging coil pieces that form the general portion according to the first embodiment.
[FIG. 7] FIG. 7 is a diagram showing the positional relationship between coil pieces in a coil end portion according to the first embodiment, and is a schematic diagram of part of the stator coil as viewed from the radially inner side.
[FIG. 8] FIG. 8 is an illustration of a stator coil according to a comparative example.
[FIG. 9] FIG. 9 is an illustration of a circulating current.
[FIG. 10] FIG. 10 is an illustration of current waveforms based on the analysis results of the comparative example.
[FIG. 11] FIG. 11 is an illustration of torque waveforms based on the analysis results of the comparative example.
[FIG. 12] FIG. 12 is an illustration of current waveforms based on the analysis results according to the first embodiment.
[FIG. 13] FIG. 13 is an illustration of torque waveforms based on the analysis results according to the first embodiment.
[FIG. 14] FIG. 14 is a winding diagram of part of a stator coil according to a second embodiment.
[FIG. 15] FIG. 15 is a side view (side view as viewed in the radial direction from the radially inner side) illustrating a method for arranging coil pieces that form a general portion of the stator coil according to the second embodiment.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

### [First Embodiment]

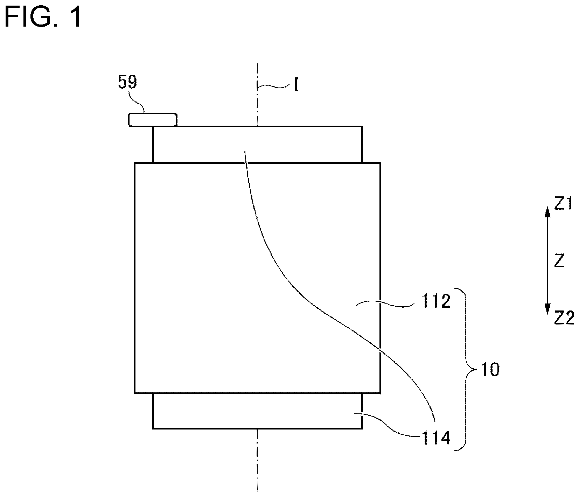

FIG. 1 is a diagram schematically showing a stator 10 for a rotating electrical machine according to an embodiment. The stator 10 for a rotating electrical machine includes a stator core 112 and a stator coil 114. The stator core 112 has a cylindrical shape having a central axis I, and may be composed of, for example, steel laminations. The configuration of the stator coil 114 will be described in detail below.

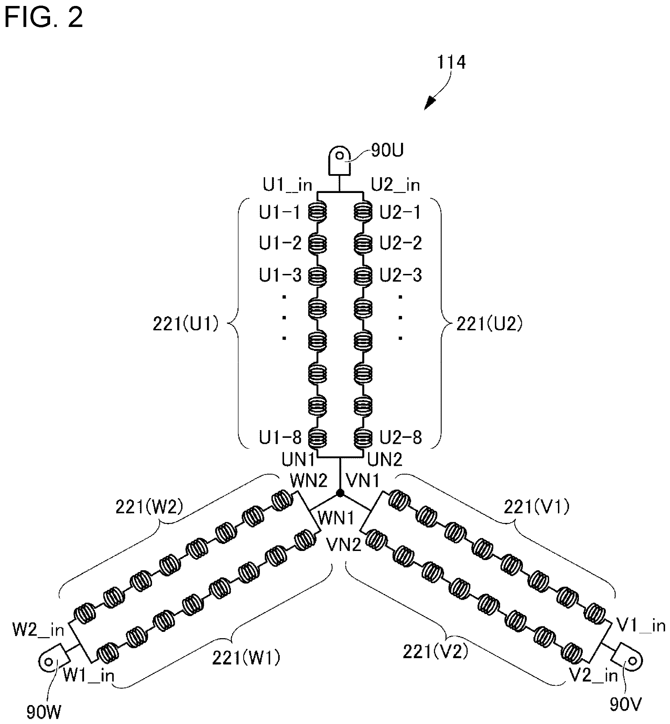

FIG. 2 is a diagram showing an example of a connection form of the stator coil 114 of the stator 10 for a rotating electrical machine according to the present embodiment. In the present embodiment, as an example, a three-phase, eight-pole configuration is used, and the number of slots is 48 (= 3 × 8 × 2). However, the present invention is also applicable to configurations with other numbers of poles.

As schematically shown in FIG. 2, the stator coil 114 is configured such that sets of coils, two for each phase, are electrically connected at a neutral point of Y-connection in a parallel relationship. Specifically, in the stator coil 114, two sets (pair) that are a first coil of a U-phase (hereinafter also referred to as "U1-phase coil 221(U1)") and a second coil of the U-phase (hereinafter also referred to as "U2-phase coil 221(U2)") are electrically connected in a parallel relationship between the neutral point and a U-phase terminal 90U on a power line side. Hereinafter, the U-phase associated with the U1-phase coil 221(U1) will also be referred to as U1-phase and the U-phase associated with the U2-phase coil 221(U2) will also be referred to as U2-phase for the sake of distinction.

The same applies to the other phases. In the stator coil 114, two sets (pair) that are a first coil 221V1 of a V-phase and a second coil 221V2 of the V-phase are electrically connected in a parallel relationship between the neutral point and a V-phase terminal 90V on the power line side. In the stator coil 114, two sets (pair) that are a first coil 221W1 of a W-phase and a second coil 221W2 of the W-phase are electrically connected in a parallel relationship between the neutral point and a W-phase terminal 90W on the power line side. The U-phase terminal 90U, the V-phase terminal 90V, and the W-phase terminal 90W are electrically connected to an inverter and a power supply (not shown) via a terminal block 59 (see FIG. 1).

The U1-phase coil 221(U1) includes eight series-connected coils U1-1 to U1-8. Similarly, the U2-phase coil 221 (U2) includes eight series-connected coils U2-1 to U2-8. The same applies to the other phases (V-phase and W-phase).

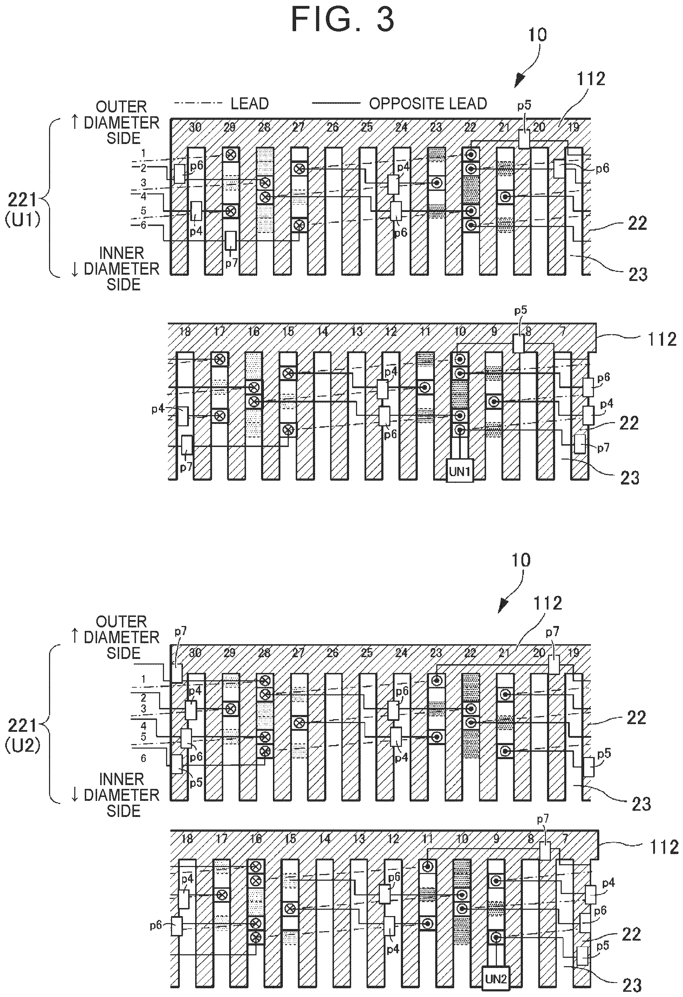

Next, the configuration of the stator coil 114 of the present embodiment will be described in detail with reference to FIGS. 3 to 6. Although the configuration for the U-phase will be mainly described below, the same may be applied to the other phases, namely the V-phase and the W-phase.

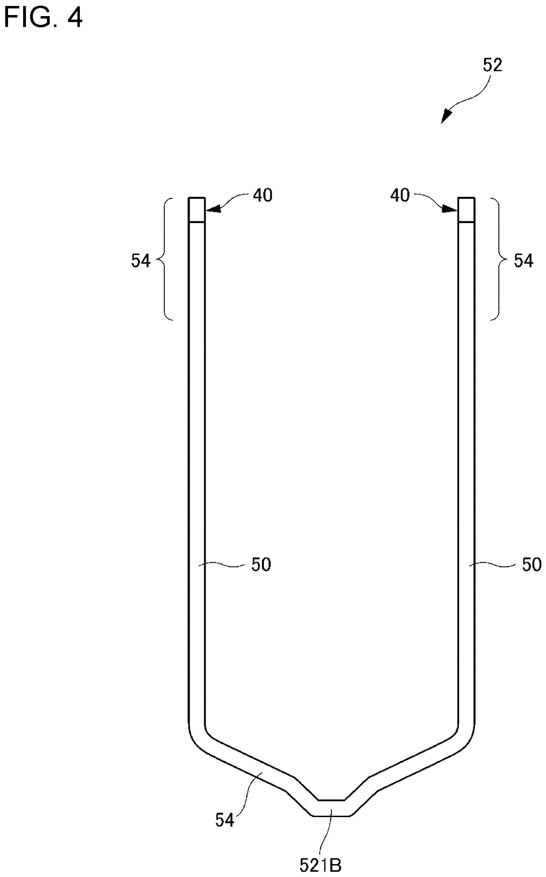

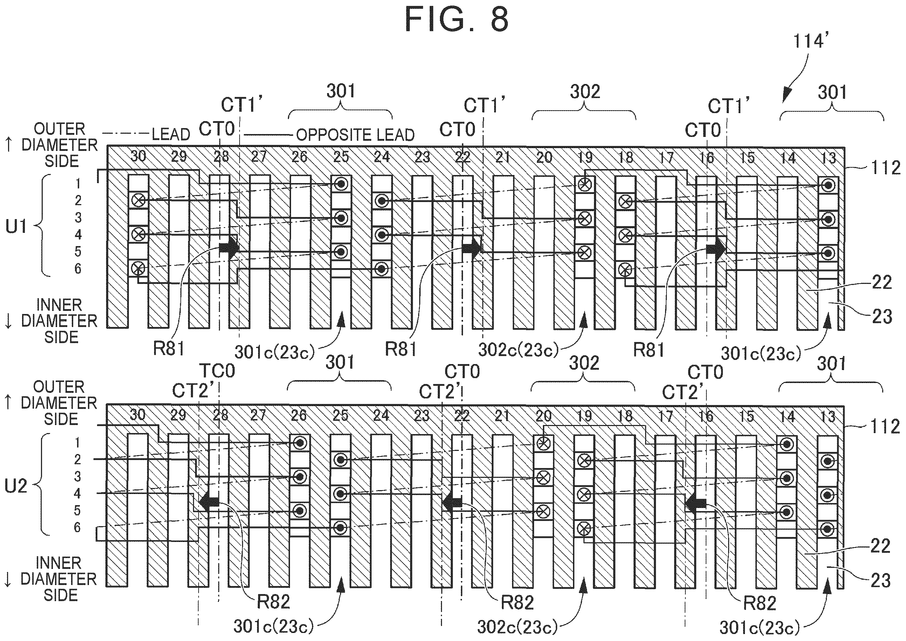

FIG. 3 is an overall winding diagram of the stator coil 114 of the present embodiment, and separately shows the U1-phase coil 221(U1) and the U2-phase coil 221(U2) together with schematic diagrams of the stator coil 114 as opened out flat in a circumferential direction and viewed in an axial direction. In FIG. 3, only part of the 48 slots is divided into two rows for clarity. In FIG. 3, the numerals above each slot 23 represent slot numbers, and the numerals 1 to 6 shown to the left of the stator core 112 indicate turn numbers. In FIG. 3, the lead sides of overhang portions of the stator coil 114 (see an overhang portion 54 in FIG. 4) are shown by long dashed short dashed lines, and the half-lead sides thereof are shown by solid lines. This rule also applies to similar drawings described below (such as FIG. 8).

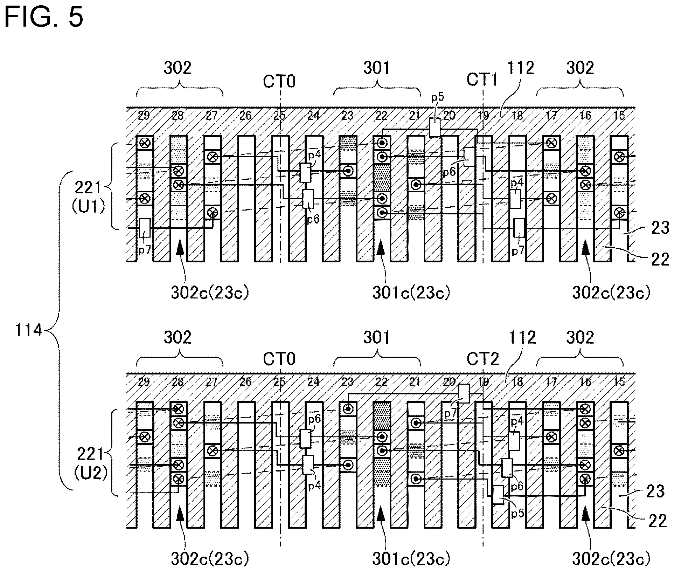

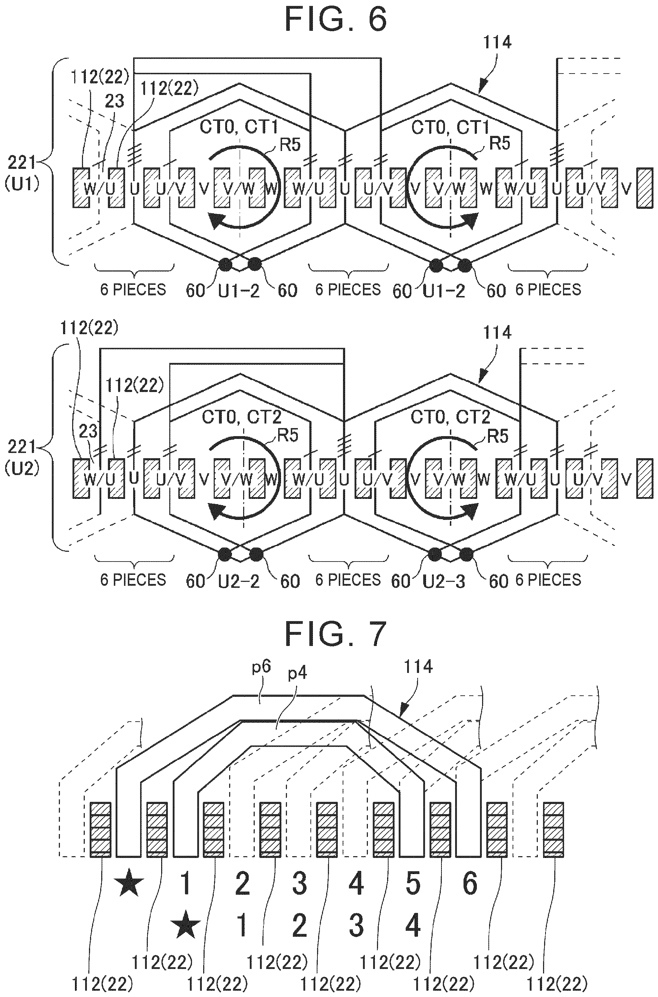

FIG. 4 is an illustration of a coil piece 52. FIG. 5 is a winding diagram (part of FIG. 3) of a general portion not associated with the neutral point etc., and is an illustration of a repetitive pattern. FIG. 6 is a side view (side view as viewed in a radial direction from the radially inner side) illustrating a method for arranging coil pieces that form the general portion of the stator coil 114. In FIG. 6, a current flowing through the stator coil 114 at a certain point in time is schematically shown by arrows R5. FIG. 6 also schematically shows welds 60 between the coil pieces, together with the numbers of coil pieces and symbols (diagonal lines) indicating the numbers of coil pieces. FIG. 7 is a diagram showing the positional relationship (axial positional relationship) between the coil pieces in a coil end portion, and is a schematic diagram of part of the stator coil 114 (part in the circumferential direction and part in the axial direction) as viewed from the radially inner side. In FIG. 7, stars and numerals represent slot pitches.

**In the** following description, the coil pieces refer to coil pieces that form the stator coil 114, and for example, may be coil pieces in a form called segment coils. In the present embodiment, as an example, each coil piece may be such a U-shaped coil piece 52 as shown in FIG. 4. In the following description, a slot pitch corresponding to N slots (N is a positive integer) will also be referred to as N-slot pitch. For example, a slot pitch corresponding to six slots is also referred to as six-slot pitch. It should be noted that (N - 1) slots 23 are located between two slots 23 that form the N-slot pitch.

**In** the example shown in FIG. 4, one coil piece 52 may be formed in a generally U-shape having a pair of linear slot insertion portions 50 and an overhang portion 54 connecting the pair of slot insertion portions 50. An overhang portion 54 on the other side in the axial direction (upper side in FIG. 4) may be formed by forming in the circumferential direction from the state shown in FIG. 4. Joint portions 40 to be joined to the joint portions 40 of the overhang portion 54 of other coil pieces 52 are set at the ends of the overhang portion 54 on the other side in the axial direction (upper side in FIG. 4). The joint portions 40 are portions where an insulating film (not shown) has been removed (i.e., portions where conductor portions for linear conductors are exposed).

When installing the coil piece 52 in the stator core 112, the pair of slot insertion portions 50 is inserted (wound) into the slots 23 between teeth 22 in the circumferential direction (see FIG. 3). In this case, the coil piece 52 can be installed in, for example, the axial direction.

The number of slot insertion portions 50 of the coil pieces 52 shown in FIG. 3 that are inserted side by side in the radial direction in one slot 23 (in the present embodiment, six as an example) correspond to the number of turns. A plurality of overhang portions 54 extending in the circumferential direction is thus located side by side in the radial direction at both axial ends of the stator core 112. The overhang portions 54 (and the joint portions 40 that are part thereof) form coil end portions that are portions protruding axially outward from axial end faces of the stator core 112.

The lower overhang portion 54 of each coil piece 52 may have an offset portion 521B that offsets the coil piece 52 by one layer in a radially separating direction. The upper overhang portion 54 may have the same offset portion (not shown).

In the present embodiment, the U1-phase coil 221(U1) and the U2-phase coil 221(U2) are both composed of a plurality of coil pieces. The plurality of coil pieces is of a plurality of types, and the type is different depending on the circumferential interval (slot pitch) between the pair of slots 23 into which the coil pieces are inserted. Not all of the plurality of types of coil pieces need be in the form of a U-shape. The plurality of types of coil pieces may include an I-shaped coil piece (i.e., a coil piece having only one slot insertion portion 50), or all of the plurality of types of coil pieces may be in the form of an I-shape. In the following description, a coil piece 52 that is inserted into one slot 23 means a coil piece 52 having a slot insertion portion 50 that is inserted into that one slot 23. Therefore, the U-shaped coil piece 52 having two slot insertion portions 50 can also be regarded as a combination of a coil piece that is inserted into one slot 23 and a coil piece that is inserted into another slot 23.

In the present embodiment, the stator coil 114 is wound by short pitch winding. Specifically, the U1-phase coil 221(U1) includes coil pieces that are inserted into a plurality of slots 23 (hereinafter also referred to as "middle slots 23c") forming a six-slot pitch (corresponding to a magnetic pole pitch) along the entire circumference of the stator core 112 (hereinafter these coil pieces will also be referred to as "first coil pieces p6" for the sake of distinction). The slot insertion portions 50 on both sides in the circumferential direction of each first coil piece p6 are inserted into a pair of middle slots 23c that forms a six-slot pitch. It should be noted that a "coil piece is inserted into slots 23" means that the slot insertion portions 50 of the coil piece are inserted into the slots 23.

The U1-phase coil 221(U1) also includes coil pieces that are inserted into a plurality of pairs of slots 23 forming a four-slot pitch (these coil pieces will be hereinafter referred to as "second coil pieces p4" for the sake of distinction). The slot insertion portions 50 on both sides in the circumferential direction of each second coil piece p4 are inserted into a pair of slots 23 that forms a four-slot pitch.

The U1-phase coil 221(U1) also includes coil pieces that are inserted into a plurality of pairs of slots 23 forming a five-slot pitch (these coil pieces will be hereinafter referred to as "third coil pieces p5" for the sake of distinction). The slot insertion portions 50 on both sides in the circumferential direction of each third coil piece p5 are inserted into a pair of slots 23 that forms a five-slot pitch.

The U1-phase coil 221(U1) also includes coil pieces that are inserted into a plurality of pairs of slots 23 forming a seven-slot pitch (these coil pieces will be hereinafter referred to as "fourth coil pieces p7" for the sake of distinction). The slot insertion portions 50 on both sides in the circumferential direction of each fourth coil piece p7 are inserted into a pair of slots 23 that forms a seven-slot pitch.

**In** the present embodiment, in the case where triplets of slots, each consisting of three slots 23 adjacent to each other in the circumferential direction with the middle slot 23c in the middle, are first slot triplets 301 and second slot triplets 302 alternately in the circumferential direction, the first coil pieces p6 to the fourth coil pieces p7 are arranged in the following relationship as shown in FIGS. 5 and 6.

In the U1-phase (U1-phase coil 221(U1)), the first coil piece p6, the third coil piece p5, and the fourth coil piece p7 are inserted into the middle slot 23c of each first slot triplet 301 (hereinafter also referred to as "first middle slot 301c" for the sake of distinction). In this case, the slot insertion portions 50 on one side in the circumferential direction of the first coil piece p6, third coil piece p5, and fourth coil piece p7 are inserted into the first middle slot 301c.

In the U1-phase, only the first coil piece p6 is inserted into the middle slot 23c of each second slot triplet 302 (hereinafter also referred to as "second middle slot 302c" for the sake of distinction).

In the U1-phase, the second coil pieces p4 are provided in pairs with the first coil pieces p6. Therefore, the second coil pieces p4 adjacent to each other in the circumferential direction are inserted into the slots 23 located on both sides of the middle slot 23c. At this time, the second coil piece p4 and the first coil piece p6 are arranged concentrically about a coil center position CT0.

In the U1-phase, unlike the first coil pieces p6 and the second coil pieces p4, the third coil pieces p5 and the fourth coil pieces p7 are arranged such that only one third coil piece p5 and only one fourth coil piece p7 are provided at every 12-slot pitch. That is, two first coil pieces p6 and two second coil pieces p4 are provided between a pair of first middle slots 301c (or between a pair of second middle slots 302c) circumferentially adjacent to each other, whereas only one third coil piece p5 and one fourth coil piece p7 are provided therebetween. The third coil piece p5 and the fourth coil piece p7 are arranged on the same one side out of both sides in the circumferential direction of the first middle slot 301c.

In this case, in the U1-phase, a total of six slot insertion portions 50 are inserted into each first slot triplet 301. Namely, four are inserted into the first middle slot 301c, and one is inserted into each of the slots 23 located on both sides in the circumferential direction of the first middle slot 301c. A total of six slot insertion portions 50 are inserted into each second slot triplet 302. Namely, two are inserted into the second middle slot 302c, and two are inserted into each of the slots 23 located on both sides in the circumferential direction of the second middle slot 302c.

Like the U1-phase coil 221(U1) described above, the U2-phase coil 221(U2) includes coil pieces (first coil pieces p6) that are inserted into a plurality of slots 23 (middle slots 23c) forming a six-slot pitch along the entire circumference of the stator core 112. The middle slots 23c are the same slots as the middle slots 23c for the U1-phase coil 221(U1). The slot insertion portions 50 on both sides in the circumferential direction of each first coil piece p6 are inserted into a pair of middle slots 23c that forms a six-slot pitch.

The U2-phase coil 221(U2) also includes coil pieces (second coil pieces p4) that are inserted into a plurality of pairs of slots 23 forming a four-slot pitch. The slot insertion portions 50 on both sides in the circumferential direction of each second coil piece p4 are inserted into a pair of slots 23 that forms a four-slot pitch.

The U2-phase coil 221(U2) also includes coil pieces (third coil pieces p5) that are inserted into a plurality of pairs of slots 23 forming a five-slot pitch. The slot insertion portions 50 on both sides in the circumferential direction of each third coil piece p5 are inserted into a pair of slots 23 that forms a five-slot pitch.

The U2-phase coil 221(U2) also includes coil pieces (fourth coil pieces p7) that are inserted into a plurality of pairs of slots 23 forming a seven-slot pitch. The slot insertion portions 50 on both sides in the circumferential direction of each fourth coil piece p7 are inserted into a pair of slots 23 that forms a seven-slot pitch.

In this way, the configuration of the U2-phase coil pieces is substantially the same as the configuration of the U1-phase coil pieces, but their detailed shapes may be different from each other. For example, the first coil pieces p6 of the U2-phase may have a slightly shape from the second coil pieces p4 of the U1-phase.

In the U2-phase (U2-phase coil 221(U2)), the configuration (arrangement and current direction) of the coil pieces in the first slot triplet 301 and the configuration (arrangement and current direction) of the coil pieces in the second slot triplet 302 are in a substantially inverted relationship with the U1-phase (U1-phase coil 221(U1)) described above.

Specifically, in the U2-phase, only the first coil piece p6 is inserted into the first middle slot 301c.

In the U2-phase, the first coil piece p6, the third coil piece p5, and the fourth coil piece p7 are inserted into the second middle slot 302c. In this case, the slot insertion portions 50 on the other side in the circumferential direction of the first coil piece p6, third coil piece p5, and fourth coil piece p7 are inserted into the second middle slot 302c.

In the U2-phase, the second coil pieces p4 are provided in pairs with the first coil pieces p6. Therefore, the second coil pieces p4 adjacent to each other in the circumferential direction are inserted into the slots 23 located on both sides of the middle slot 23c. At this time, the second coil piece p4 and the first coil piece p6 are arranged concentrically about the coil center position CT0.

In the U2-phase, unlike the first coil pieces p6 and the second coil pieces p4, the third coil pieces p5 and the fourth coil pieces p7 are arranged such that only one third coil piece p5 and only one fourth coil piece p7 are provided at every 12-slot pitch. That is, two first coil pieces p6 and two second coil pieces p4 are provided between a pair of first middle slots 301c (or between a pair of second middle slots 302c) circumferentially adjacent to each other, whereas only one third coil piece p5 and one fourth coil piece p7 are provided therebetween. The third coil piece p5 and the fourth coil piece p7 are arranged on the same one side out of both sides in the circumferential direction of the first middle slot 301c. This is the same as the U1-phase coil 221(U1).

In this case, in the U2-phase, a total of six slot insertion portions 50 are inserted into each first slot triplet 301. Namely, two are inserted into the first middle slot 301c, and two is inserted into each of the slots 23 located on both sides in the circumferential direction of the first middle slot 301c. A total of six slot insertion portions 50 are inserted into each second slot triplet 302. Namely, four are inserted into the second middle slot 302c, and one is inserted into each of the slots 23 located on both sides in the circumferential direction of the second middle slot 302c. As described above, the arrangement (and current direction) of the slot insertion portions 50 of the coil pieces in the first slot triplet 301 and the arrangement (and current direction) of the slot insertion portions 50 of the coil pieces in the second slot triplet 302 are in an inverted relationship between the U1-phase and the U2-phase. That is, if one arrangement is shifted by six slots and inverted in the radial direction, this arrangement will overlap the other.

In the present embodiment, the coil pieces of the stator coil 114 are joined to each other at their one sides in the axial direction. Each pair of slots 23 into which each pair of coil pieces to be joined is inserted in each phase is separated by a fixed number of slots in the circumferential direction. In the present embodiment, each pair of slots 23 into which each pair of coil pieces to be joined is inserted in each phase is separated by five slots, as shown in FIGS. 3 and 6 (see the welds 60) etc. This allows welding positions to be set at a fixed pitch on the welding side (lead side), which facilitates improvement in efficiency of the welding process.

In the present embodiment, as schematically shown in FIG. 7, a coil end portion formed by the first coil piece p6 (portion located axially outward of the axial end face of the stator core 112) extends axially outward of a coil end portion formed by the second coil piece p4. This is the same in both the U1-phase coil 221(U1) and the U2-phase coil 221(U2). This can reduce the overall size of the coil end portions in the stator coil 114.

Next, further effects of the present embodiment will be described with reference to FIGS. 8 to 13.

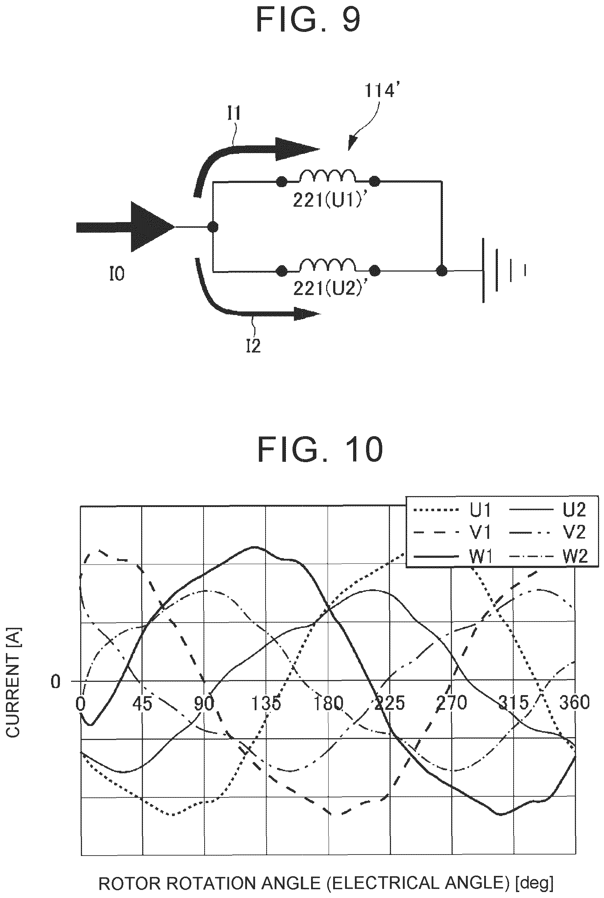

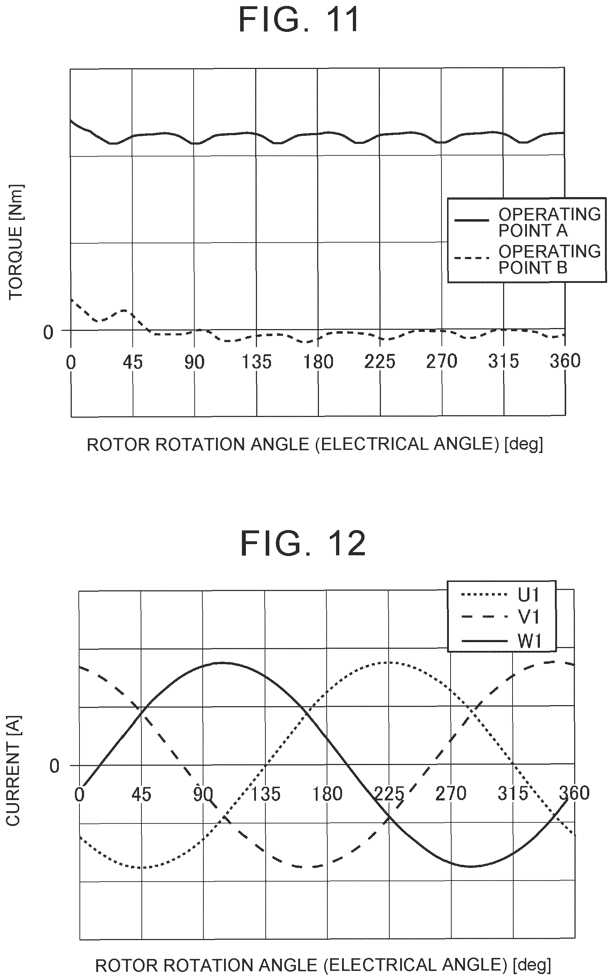

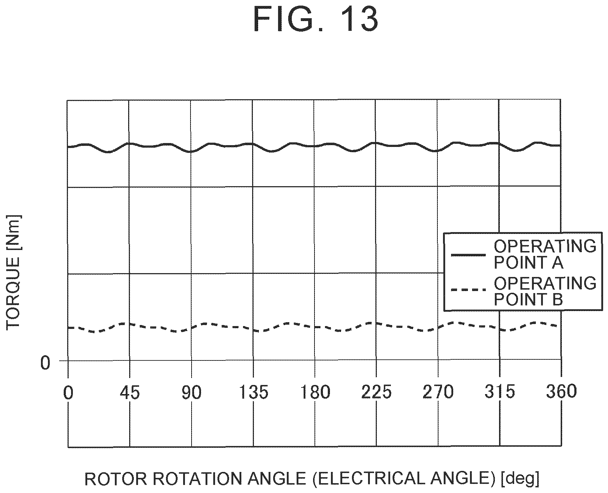

FIG. 8 is an illustration of a stator coil 114' according to a comparative example, where the upper side shows the configuration of a U1-phase coil 221(U1)', and the lower side shows the configuration of a U2-phase coil 221(U2)'. FIG. 8 shows a configuration of a general portion of the comparative example corresponding to FIG. 5. FIG. 9 is an illustration of a circulating current, and FIG. 10 is an illustration of current waveforms based on the analysis results of the comparative example. In FIG. 10, the abscissa represents the rotor rotation angle (electrical angle), and current waveforms of each phase for 360 degrees are shown. FIG. 11 is an illustration of torque waveforms (torque waveforms at specific operating points A, B) based on the analysis results of the comparative example. In FIG. 12, the abscissa represents the rotor rotation angle (electrical angle), and torque waveforms for 360 degrees are shown. FIG. 12 is an illustration of current waveforms based on the analysis results of the present embodiment for comparison with FIG. 10. FIG. 13 is an illustration of torque waveforms (torque waveforms at specific operating points A, B) based on the analysis results of the present embodiment for comparison with FIG. 11.

In the comparative example, the stator coil 114' is wound by short pitch winding, and the arrangement of the slot insertion portions 50 of the coil pieces in each first slot triplet 301 (arrangement for six turns) and the arrangement of the slot insertion portions 50 of the coil pieces in each second slot triplet 302 (arrangement for six turns) are the same as in the embodiment.

In the comparative example, the U1-phase coil 221(U1)' and the U2-phase coil 221(U2)' are wound in such a relationship that they are shifted from each other by one slot. In this case, a circumferential coil center CT1' of the U1-phase coil 221(U1)' for each magnetic pole and a circumferential coil center CT2' of the U2-phase coil 221(U2)' for each magnetic pole are each shifted by a fixed amount from a circumferential coil center position CT0 for each magnetic pole pitch. Specifically, as shown in FIG. 8, the circumferential coil centers CT1' of the U1-phase coil 221(U1)' are shifted toward one side in the circumferential direction with respect to the coil center positions CT0 (see arrows R81). This shifting occurs in the same manner with respect to every coil center position CT0 in the U1-phase. The circumferential coil centers CT2' of the U2-phase coil 221(U2)' are shifted toward the other side in the circumferential direction with respect to the coil center positions CT0 (see arrows R82). This shifting occurs in the same manner with respect to every coil center position CT0 in the U2-phase. The coil center position CT0 corresponds to an intermediate position between the middle slots 23c adjacent to each other in the circumferential direction, and is present between every two middle slots 23c adjacent to each other in the circumferential direction. Therefore, the number of coil center positions CT0 and the number of circumferential coil centers CT1' of the U1-phase coil 221(U1)' are the same as the number of magnetic poles.

In such a comparative example, when each coil center CT1' of the U1-phase is shifted toward the one side in the circumferential direction with respect to the corresponding coil center position CT0, and each coil center CT2' of the U2-phase is shifted toward to the other side in the circumferential direction with respect to the corresponding coil center position CT0, a circulating current tends to be generated that circulates within the loop of the U1-phase coil 221(U1)' and U2-phase coil 221(U2)' connected in parallel. Specifically, as schematically shown in FIG. 10, a significant difference occurs between a current flowing through the parallel-connected U1-phase coil 221(U1)' (see current I1 in FIG. 10) and a current flowing through the parallel-connected U2-phase coil 221(U2)' (see current I2 in FIG. 10), and the circulating current tends to occur due to this difference. When such a circulating current occurs, a significant difference occurs between the current waveforms of the U1-phase and U2-phase (in this case, the waveforms are significantly distorted sign waves that do not overlap each other) as shown in FIG. 10. This causes a disadvantage that the torque decreases with respect to a target torque value, as shown in FIG. 11.

According to the present embodiment, on the other hand, as shown in FIG. 6, the coil centers CT1 of the U1-phase (coil centers of the coils U1-1 to U1-8) coincide with the corresponding coil center positions CT0, and the coil centers CT2 of the U2-phase (coil centers of coils U2-1 to U2-8) coincide with the corresponding coil center positions CT0. This can reduce or eliminate the above disadvantage that occurs in the comparative example. Specifically, no significant difference occurs between the currents flowing through the U1-phase coil 221(U1) and U2-phase coil 221(U2) connected in parallel, so that a circulating current is less likely to occur. Therefore, as shown in FIG. 12, no significant difference occurs between the current waveform of the U1-phase and U2-phase (in this case, the waveforms are smooth sine waves having little distortion due to short pitch winding and overlapping each other). As a result, as shown in FIG. 13, the torque will not decrease with respect to a target torque value, and the torque can be generated according to the target value.

### [Second Embodiment]

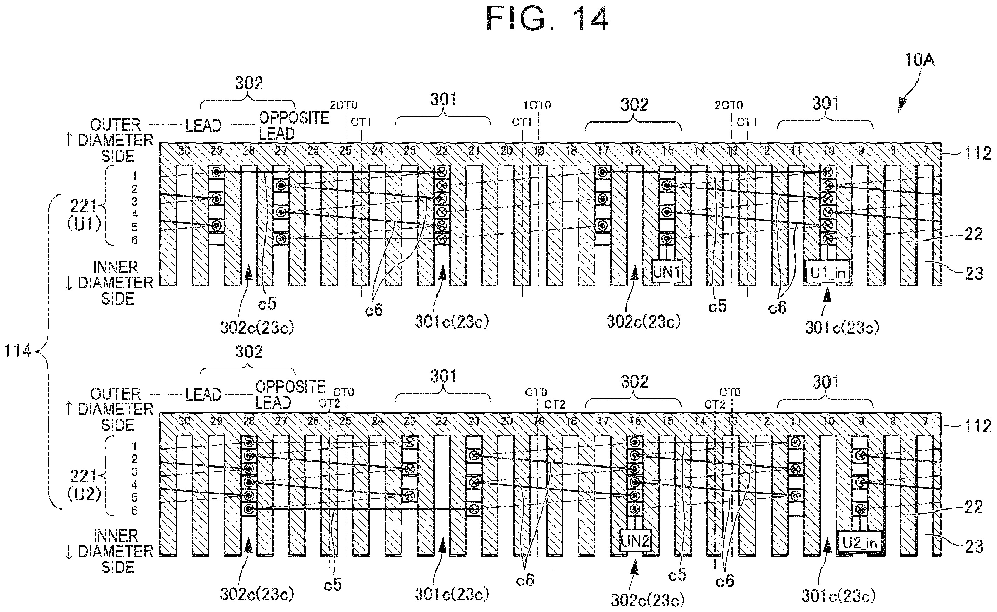

Next, another embodiment (hereinafter referred to as "second embodiment" for the sake of distinction) will be described with reference to FIG. 14.

FIG. 14 is a winding diagram of part of a stator coil 114A according to the second embodiment, and how to read the diagram is the same as that of FIG. 3.

In the present embodiment as well, the stator coil 114A is wound by short pitch winding, and the arrangement of the slot insertion portions 50 of the coil pieces in each first slot triplet 301 and the arrangement of the slot insertion portions 50 of the coil pieces in each second slot triplet 302 are the same as in the first embodiment described above.

A U1-phase coil 221A(U1) includes a plurality of fifth coil pieces c5 that is inserted into a plurality of pairs of slots 23 forming a seven-slot pitch (slot pitch that is larger than the magnetic pole pitch by one slot).

The U1-phase coil 221A(U1) also includes a plurality of sixth coil pieces c6 that is inserted into a plurality of pairs of slots 23 forming a five-slot pitch (slot pitch that is smaller than the magnetic pole pitch by one slot).

In the present embodiment, in the case where triplets of slots, each consisting of three slots 23 adjacent to each other in the circumferential direction with a middle slot 23c in the middle, are first slot triplets 301 and second slot triplets 302 alternately in the circumferential direction, the fifth coil pieces c5 and the sixth coil pieces c6 are arranged in the following relationship.

In the U1-phase (U1-phase coil 221A(U1)), the fifth coil piece c5 and the sixth coil piece c6 are inserted into the middle slot 23c (first middle slot 301c) of each first slot triplet 301, and the fifth coil piece c5 and the sixth coil piece c6 are inserted into the slots 23 located on both sides in each second slot triplet 302.

The slot insertion portion 50 on one side in the circumferential direction of the fifth coil piece c5 is inserted into the middle slot 23c of the first slot triplet 301, and the slot insertion portion 50 on the other side in the circumferential direction is inserted into the slot 23 located on the one side in the circumferential direction of the middle slot 23c in the second slot triplet 302.

**In** this case, in the U1-phase, six slot insertion portions 50 are inserted into the first middle slot 301c of each first slot triplet 301. On the other hand, no slot insertion portion 50 is inserted into the slots 23 located on both sides in the circumferential direction of the first middle slot 301c in each first slot triplet 301. A total of six slot insertion portions 50 are inserted into each second slot triplet 302. Namely, three are inserted into each of the slots 23 located on both sides in the circumferential direction of the second middle slot 302c. On the other hand, no slot insertion portion 50 is inserted into the second middle slot 302c of each second slot triplet 302.

Like the U1-phase coil 221A(U1) described above, a second U2-phase coil 221A(U2) includes a plurality of fifth coil pieces c5 that is inserted into a plurality of pairs of slots 23 forming a seven-slot pitch. The U2-phase coil 221A(U2) also includes a plurality of sixth coil pieces c6 that is inserted into a plurality of pairs of slots 23 forming a five-slot pitch.

In the U2-phase (U2-phase coil 221A(U2)), the configuration (arrangement and current direction) of the coil pieces in the first slot triplet 301 and the configuration (arrangement and current direction) of the coil pieces in the second slot triplet 302 are in a substantially inverted relationship with the U1-phase (U1-phase coil 221A(U1)) described above.

Specifically, in the U2-phase (U2-phase coil 221A(U2)), the fifth coil piece c5 and the sixth coil piece c6 are inserted into the second middle slot 302c of each second slot triplet 302, and the fifth coil piece c5 and the sixth coil piece c6 are inserted into the slots 23 located on both sides in each first slot triplet 301.

In this case, in the U2-phase, a total of six slot insertion portions 50 are inserted into each first slot triplet 301. Namely, three are inserted into each of the slots located on both sides of the first middle slot 301c. On the other hand, no slot insertion portion 50 is inserted into the first middle slot 301c of each first slot triplet 301. Six slot insertion portions 50 are inserted into the second middle slot 302c of each second slot triplet 302. On the other hand, no slot insertion portion 50 is inserted into the slots 23 located on both sides in the circumferential direction of the second middle slot 302c in each second slot triplet 302. As described above, the arrangement (and current direction) of the slot insertion portions 50 of the coil pieces in the first slot triplet 301 and the arrangement (and current direction) of the slot insertion portions 50 of the coil pieces in the second slot triplet 302 are in an inverted relationship between the U1-phase and the U2-phase. That is, if one arrangement is shifted by six slots and inverted in the radial direction, this arrangement will overlap the other.

In the present embodiment as well, as in the first embodiment described above, the coil pieces of the stator coil 114A are joined to each other at their one sides in the axial direction. Each pair of slots 23 into which each pair of coil pieces to be joined is inserted in each phase is separated by a fixed number of slots in the circumferential direction. In the present embodiment, each pair of slots 23 into which each pair of coil pieces to be joined is inserted in each phase is separated by five slots, as shown in FIG. 14 etc. This allows welding positions to be set at a fixed pitch on the welding side (lead side), which facilitates improvement in efficiency of the welding process.

Moreover, the present embodiment can also reduce, for example, the number of types of coil pieces forming the general portion, compared to the first embodiment described above. That is, in the first embodiment described above, there are four types of coil pieces forming the general portion, even considering the difference in slot pitch alone (even the slot pitch is same, details of the coil pieces may be different). In the present embodiment, however, there are only two types regarding the difference in slot pitch. As described above, the present embodiment can reduce the number of types of coil pieces required to form the stator coil 114A, and can improve manufacturing efficiency.

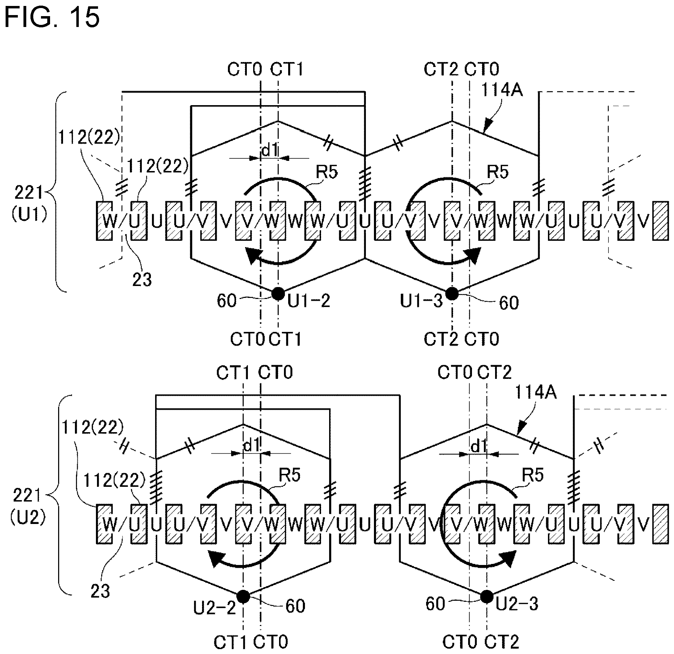

Like FIG. 6 described above, FIG. 15 is a side view (side view as viewed in the radial direction from the radially inner side) illustrating a method for arranging the coil pieces that form the general portion of the stator coil 114A according to the second embodiment. In FIG. 15, a current flowing through the stator coil 114A at a certain point in time is schematically shown by arrows R5. FIG. 15 also schematically shows welds 60 between the coil pieces. FIG. 15 is also an illustration of the effect of reducing a circulating current according to the present embodiment, and shows the relationship between the coil centers CT1, CT2 of the stator coil 114A and the coil center position CT0 (coil center position CT0 for each magnetic pole pitch). FIG. 15 shows a winding diagram of the general portion in the same manner as in FIG. 14. In FIG. 15, the coil centers CT1 of the coils U1-2 and U1-3 are representatively shown for the U1-phase, but the same applies to the other coils U1-1, U1-4 to U1-8. The same also applies to the U2-phase.

According to the present embodiment, the coil centers CT1 of the U1-phase (coil centers of the coils U1-1 to U1-8) are alternately shifted by the same amount toward one side and the other side in the axial direction with respect to the corresponding coil center positions CT0. Specifically, as shown in FIG. 15, the coil center CT1 of the coil U1-2 is shifted by a fixed amount Δd (e.g., half a slot pitch) toward the one side in the circumferential direction (side closer to the coil U1-3) with respect to the corresponding coil center position CT0. The coil center CT1 of the coil U1-3 is shifted by the fixed amount Δd toward the other side in the circumferential direction (side closer to the coil U1-2) with respect to the corresponding coil center position CT0. In this case, the amount of shifting is the same, namely the fixed amount Δd, and the shifting is alternately reversed in the circumferential direction. Therefore, the amounts of shifting are cancelled out, and the circulating current is less likely to occur. Similarly, for the U2-phase, the coil center CT2 of the coil U2-2 is shifted by the fixed amount Δd toward one side in the circumferential direction (side farther from the coil U2-3) with respect to the corresponding coil center position CT0. The coil center CT2 of the coil U2-3 is shifted by the fixed amount Δd toward the other side in the circumferential direction (side farther from the coil U1-2) with respect to the corresponding coil center position CT0. In this case, the amount of shifting is the same, namely the fixed amount Δd, and the shifting is alternately reversed in the circumferential direction. Therefore, the amounts of shifting are cancelled out, and the circulating current is less likely to occur.

As described above, according to the present embodiment, like the effects of the first embodiment described above with reference to FIGS. 12 and 13, no significant difference occurs between the current waveforms of the U1-phase and U2-phase. As a result, the torque will not decrease with respect to a target torque value, and the torque can be generated according to the target value.

Although the embodiments are described in detail above, the present disclosure is not limited to the specific embodiments, and various modifications and changes can be made within the scope of the claims. It is also possible to combine all or part of the constituent elements of the embodiments described above.

### Description of the Reference Numerals

10 ... stator for rotating electrical machine, 112 ... stator core, 114, 114A ... stator coil, 23 ... slot, 23c ... middle slot, 52 ... coil piece, p6 ... first coil piece, p4 ... second coil piece, p5 ... third coil piece, p7 ... fourth coil piece, c5 ... fifth coil piece, c6 ... sixth coil piece, 301 ... first slot triplet, 302 ... second slot triplet, CT0 ... coil center position, CT1 ... coil center (circumferential coil center of first set of coils), CT2 ... coil center (circumferential coil center of second set of coils)

## Claims

1. A stator for a rotating electrical machine, the stator comprising:
a stator core having a plurality of slots; and
a stator coil formed by installing, for each phase, a plurality of coil pieces along an entire circumference of the stator core, wherein
the stator coil is wound in such a manner that two sets of coils are connected in parallel for each phase, and is wound by short pitch winding, and
for each phase, each of a circumferential coil center of a first set of the coils and a circumferential coil center of a second set of the coils coincides with a coil center position for each phase, the coil center position being formed at each magnetic pole pitch along the entire circumference of the stator core, or is alternately shifted by a same amount toward one side and the other side in a circumferential direction with respect to the coil center position for each magnetic pole pitch.

2. The stator for a rotating electrical machine according to claim 1, wherein
the plurality of coil pieces of the stator coil is joined to each other at one sides in an axial direction of the plurality of coil pieces, and
each pair of the slots into which each pair of the coil pieces to be joined is inserted in each phase is separated by a fixed number of slots in the circumferential direction.

3. The stator for a rotating electrical machine according to claim 1, wherein
the plurality of coil pieces includes, for each phase, a plurality of first coil pieces and a plurality of second coil pieces,
the plurality of first coil pieces is inserted in a plurality of middle slots each located on both sides in the circumferential direction with respect to the coil center position for each magnetic pole pitch, the plurality of middle slots forming a slot pitch corresponding to the magnetic pole pitch,
the plurality of second coil pieces is inserted in a plurality of pairs of the slots, the plurality of pairs of the slots being arranged along the entire circumference of the stator core and each located with the coil center position in a middle, and the plurality of pairs of the slots forming a slot pitch smaller than the magnetic pole pitch by two slots, and
a coil end portion formed by the first coil piece extends axially outward of a coil end portion formed by the second coil piece.

4. The stator for a rotating electrical machine according to claim 3, wherein
the plurality of coil pieces further includes, for each phase, a plurality of third coil pieces and a plurality of fourth coil pieces,
the plurality of third coil pieces is inserted in a plurality of pairs of the slots that forms a slot pitch larger than the magnetic pole pitch by one slot,
the plurality of fourth coil pieces is inserted in a plurality of pairs of the slots that forms a slot pitch smaller than the magnetic pole pitch by one slot, and
when triplets of the slots, each consisting of three slots adjacent to each other in the circumferential direction with the middle slot in a middle, are first slot triplets and second slot triplets alternately in the circumferential direction for each phase,
the first coil piece, the third coil piece, and the fourth coil piece in the first set are inserted in the middle slot of the first slot triplet for each phase,
only the first coil piece in the first set is inserted in the middle slot of the second slot triplet for each phase,
only the first coil piece in the second set is inserted in the middle slot of the first slot triplet for each phase, and
the first coil piece, the third coil piece, and the fourth coil piece in the second set are inserted in the middle slot of the second slot triplet for each phase.

5. The stator for a rotating electrical machine according to claim 1, wherein
the plurality of coil pieces includes, for each phase, a plurality of fifth coil pieces and a plurality of sixth coil pieces,
the plurality of fifth coil pieces is inserted in a plurality of pairs of the slots that forms a slot pitch larger than the magnetic pole pitch by one slot,
the plurality of sixth coil pieces is inserted in a plurality of pairs of the slots that forms a slot pitch smaller than the magnetic pole pitch by one slot, and
when triplets of the slots, each consisting of three slots adjacent to each other in the circumferential direction with a corresponding one of a plurality of middle slots in a middle, are first slot triplets and second slot triplets alternately in the circumferential direction for each phase, the plurality of middle slots forming the magnetic pole pitch along the entire circumference of the stator core,
the fifth coil piece in the first set is inserted in the middle slot of the first slot triplet for each phase, and the fifth coil piece and the sixth coil piece in the first set are inserted in the slots at both sides in the second slot triplet for each phase, and
the fifth coil piece in the second set is inserted in the middle slot of the second slot triplet for each phase, and the fifth coil piece and the sixth coil piece in the second set are inserted in the slots at both sides in the first slot triplet for each phase.
